# EUROPÄISCHE PATENTSCHRIFT

(11) **EP 0 578 855 B1**
(45) Veröffentlichungstag und Bekanntmachung des Hinweises auf die Patenterteilung: **24.04.1996**
(21) Anmeldenummer: 92112123.2
(22) Anmeldetag: 16.07.1992
(51) Int. Cl.: H01M 8/02, C22C 32/00

(54) **Material für die metallischen Komponenten von Hochtemperatur-Brennstoffzellen-Anlagen**
Material for the metallic components of high-temperature fuel cell stacks
Matériau pour les composants métalliques de dispositifs de piles à combustible fonctionnant à haute température

(43) Veröffentlichungstag der Anmeldung: 19.01.1994
(73) Patentinhaber: SIEMENS AKTIENGESELLSCHAFT, D-80333 München (DE); PLANSEE Aktiengesellschaft, A-6600 Reutte, Tirol (AT)
(72) Erfinder: Greiner, Horst, Dipl.-Ing., D-91301 Forchheim (DE); Eck, Ralf, Dr., A-6600 Reutte (AT); Kneringer, Günter, Dr., A-6600 Reutte (AT); Köck, Wolfgang, Dr., A-6600 Reutte (AT)
(74) Vertreter: Fuchs, Franz-Josef, Dr.-Ing.

(56) Entgegenhaltungen:
- EP-A- 0 338 823
- EP-A- 0 411 374
- EP-A- 0 425 939
- EP-A- 0 510 495
- US-A- 3 516 865
- PATENT ABSTRACTS OF JAPAN vol. 15, no. 007 (C-0794)9. Januar 1991 & JP-A-02258946
- BERICHTE DER BUNSEN-GESELLSCHAFT FUR PHYSIKALISCHE CHEMIE Bd. 94, Nr. 9, 1990, WEINHEIM DE Seiten 978 - 981 E. IVERS-TIFFEE ET AL 'Ceramic and Metallic Components for a Planar SOFC'

## Beschreibung

Die Erfindung bezieht sich auf Hochtemperatur-Brennztoffzellen-Anlagen, die mit aus Yttrium stabilisiertem Zirkonoxid bestehenden keramischem Festelektrolyten versehen sind.

Hochtemperatur-Brennstoffzellen-Anlagen -Anlagen - auch Solid Oxide Fuel Cell (SOFC)-Anlagen genannt - eignen sich infolge der relativ hohen Betriebstemperaturen - sie liegen im Bereich von 800 bis 1100 °C - im Gegensatz zu Niedertemperatur-Brennstoffzellen-Anlagen dazu, außer Wasserstoffgas auch Kohlenwasserstoffe, wie zum Beispiel Erdgas oder flüssig speicherbares Propan, umzusetzen. Wird dem Brennstoff Kohlendioxid und Wasserdampf zugesetzt, so kann bei den hohen Temperaturen, infolge der Konvertierung des Brennstoffes, jede Rußbildung vermieden werden. Bei solchen Hochtemperatur-Brennstoffzellen-Anlagen werden temperaturbedingt feste Elektrolyte eingesetzt. Für solche Anwendungszwecke ist es bekannt, im wesentlichen aus Zirkonoxid und geringen Zusätzen etwa von Yttriumoxid, bestehende keramische Festelektrolytplatten zwischen den Elektroden einzusetzen. Bei bekannten Konstruktionen liegen die Festelektrolytplatten nebst Elektroden zu beiden Seiten unter Zwischenlage von elektrisch leitenden Fensterfolien an elektrisch gut leitenden, sogenannten bipolaren Platten an, deren gerillte Oberflächenstruktur den Zustrom von Brennstoff und Oxidator gewährleistet. Eine Vielzahl solcher Brennstoffzellen ist dann aufeinandergestapelt und damit elektrisch in Serie geschaltet und bildet so ein Brennstoffzellen-Modul oder Brennstoffzellen-Stack. Mehrere solcher Stacks können dann zu Brennstoffzellen-Anlagen zusammengebaut werden.

Wegen der hohen Betriebstemperatur sind die keramischen Festelektrolytplatten starken mechanischen Spannungen ausgesetzt, wenn sich die Brennstoffzellen-Anlage bei der Inbetriebnahme aufheizt bzw. nach dem Abschalten wieder auf Zimmertemperatur abkühlt und die an der Festelektrolytplatte anliegenden anderen Bauteile, wie bipolare Platten und Fensterfolien, auch nur geringfügig unterschiedliche thermische Ausdehnungskoeffizienten besitzen. Diese Spannungen können dann zur Rißbildung in der Festelektrolytplatte führen und die Lebensdauer des Hochtemperatur-Brennstoffzellen-Moduls beträchtlich begrenzen.

Durch die DE-A1-40 09 138 ist ein Festelektrolyt-Hochtemperatur-Brennstoffzellen-Modul bekannt, bei dem die an der aus Yttrium stabilisierten Zirkonoxid bestehenden Festelektrolytplatten anliegenden Fensterfolien und bipolaren Platten aus einer Chrom-Nickel-Legierung mit Nickelgehalten von 5 bis 15 Gew. -% oder einer Eisen-Chrom-Aluminiumlegierung mit Gehalten von 5 bis 15 Gew. -% Molybdän und/oder 5 bis 15 Gew. -% Wolfram bestehen. Es ist eine Eigenart der erstgenannten Legierung, daß sie hinsichtlich ihres Ausdehnungskoeffizienten recht gut an den Ausdehnungskoeffizienten des Festelektrolyten angepaßt ist. Leider befriedigt ihre Korrosionsfestigkeit nicht ganz. Bei der zweiten Legierung ist es umgekehrt.

Der Erfindung liegt daher die Aufgabe zugrunde, einen Weg zu weisen, wie die Zyklenfestigkeit von Festelektrolyt-Hochtemperatur-Brennstoffzellen-Anlagen noch weiter gesteigert werden kann.

Diese Aufgabe wird durch die Merkmale des Anspruchs 1 gelöst. Weitere vorteilhafte Ausgestaltungen der Erfindung sind den Ansprüchen 2 bis 6 zu entnehmen.

Dadurch, daß für die metallischen Komponenten von Hochtemperatur-Brennstoffzellen-Anlagen, deren Festelektrolytplatten aus Yttrium stabilsiertem Zirkonoxid bestehen, erfindungsgemäß ein Material verwendet ist, das aus einer Chromlegierung mit 3 bis 10 Atomprozent Eisen sowie 0,5 bis 5 Atomprozent Seltenes Erdmetall und/oder Seltenes Erdmetalloxid besteht und dessen thermischer Ausdehnungskoeffizient bei einer Temperatur von 200 °C 8,5 x 10⁻⁶ bis 10,5 x 10⁻⁶ je Grad Kelvin beträgt, mit der Temperatur ansteigt und bei 900 °C einen Wert im Bereich von 14 x 10⁻⁶ bis 15 x 10⁻⁶ erreicht, ist eine wesentliche Voraussetzung geschaffen worden, um die beim Abkühlen sowie beim Wiederaufheizen auftretenden Dehnungsdifferenzen bei den in Frage kommenden Abmessungen so zu minimieren, daß der im wesentlichen aus Zirkonoxid bestehende keramische Festelektrolyt die damit verbundenen Spannungen ohne Rißbildung elastisch auffangen kann. Hierbei ist berücksichtigt, daß wegen der hohen Sprödigkeit und geringen Zugfestigkeit der Festelektrolytplatten nur verhältnismäßig geringe Zugspannungen aufgenommen werden können. Darüber hinaus ist hierfür mit einer Chromlegierung ein Material verwendet worden, welches sich bei den in Hochtemperatur-Brennstoffzellen herrschenden physikalischen und chemischen Bedingungen durch gutes Korrosions- und Diffusionsverhalten auszeichnet.

In zweckmäßiger Weiterbildung der Erfindung kann der mittlere thermische Ausdehnungskoeffizient des Materials im gesamten Temperaturbereich von 0 bis 1000 °C um weniger als 10 % vom Ausdehnungskoeffizienten des Yttrium stabilisierten Zirkonoxids abweichen. Dies hat zur Folge, daß die Yttrium stabilisierten Zirkonoxidplatten, die warm mit den metallischen Fensterfolien verlötet werden, beim Aufheizen oder Abkühlen nur kurzfristig Temperaturzonen mit geringen Spannungen durchlaufen.

In besonders vorteilhafter Weiterbildung kann das Material eine CrFe5Y₂O₃l-Legierung sein. Der mittlere Ausdehnungskoeffizient einer solchen Legierung stimmt im Bereich von 0 °C bis 1000 °C bis auf 5 % mit dem Ausdehnungskoeffizienten einer Yttrium stabilisierten zirkonoxidhaltigen Fest-elektrolytplatte überein.

Weitere Einzelheiten der Erfindung werden anhand eines in den Figuren dargestellten Ausführungsbeispiels erläutert. Es zeigen:
Figur 1 eine schaubildliche Ansicht eines Festelektrolyt-Hochtemperatur-Brennstoffzellen-Moduls,
Figur 2 eine Aufsicht auf eine bipolare Platte des Brennstoffzellen-Moduls der Figur 1,
Figur 3 einen Schnitt längs der Linie III-III der Figur 2,
Figur 4 eine Aufsicht auf ein Festelektrolyt-Element -Element des Brennstoffzellen-Moduls,
Figur 5 einen Querschnitt durch die Linie V-V der Figur 4 und
Figur 6 eine Aufsicht auf eine Fensterfolie des Brennstoffzellen-Moduls der Figur 1.

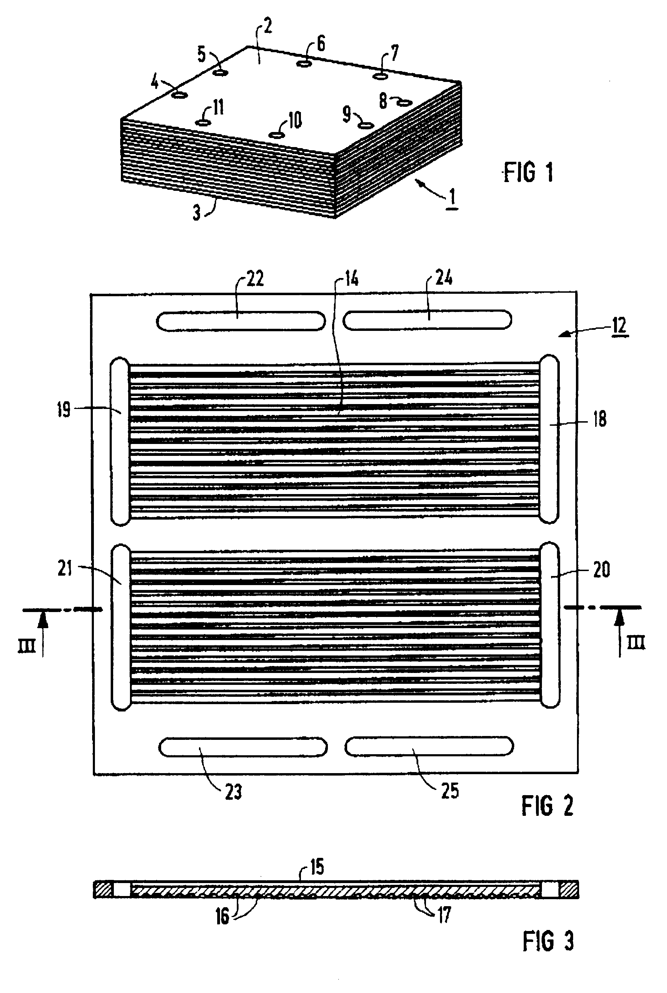

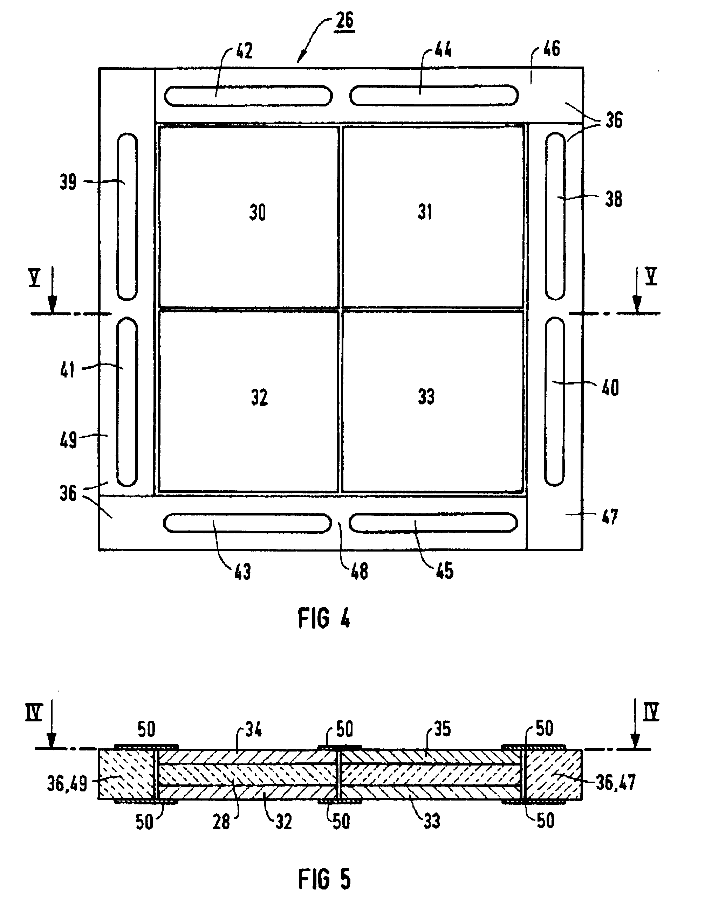

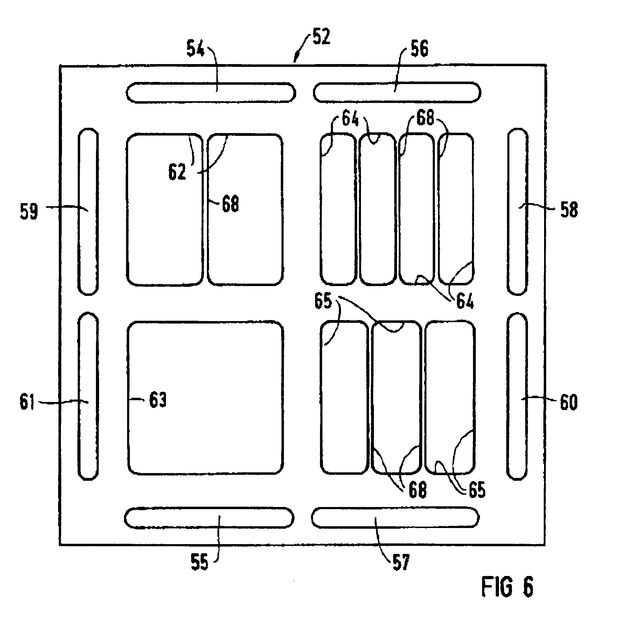

Die schaubildliche Ansicht der Figur 1 zeigt, daß das Festelektrolyt-Hochtemperatur-Brennstoffzellen-Modul aus einer Vielzahl von rechteckigen, im Ausführungsbeispiel quadratischen, plattenförmigen Elementen besteht, die aufeinandergestapelt sind und deren oberste und unterste Platte - eine sogenannte Deckplatte 2, 3 - im Randbereich acht kreisrunde Durchgangslöcher 4, 5, 6, 7, 8, 9, 10, 11 zur Einspeisung von Brennstoff bzw. Brenngas und Luft bzw. Sauerstoff trägt. In dem in der Figur 1 dargestellten Festelektrolyt-Hochtemperatur-Brennstoffzellen-Modul 1 liegen unter der oberen Deckplatte der Reihenfolge nach eine in der Figur 6 dargestellte Fensterfolie, ein in den Figuren 4 und 5 dargestelltes Festelektrolyt-Element, eine weitere Fensterfolie, eine in den Figuren 2 und 3 dargestellte bipolare Platte, eine weitere Fensterfolie, ein weiteres Festelektrolyt-Element, eine weitere Fensterfolie, eine weitere bipolare Platte usw. aufeinander. Dabei bilden jeweils ein zwischen zwei benachbarten bipolaren Platten liegendes Festelektrolyt-Element einschließlich der beidseitig am Festelektrolyt-Element unmittelbar anliegenden Fensterfolien und der an den Fensterfolien anliegenden Seiten jeder der beiden bipolaren Platten zusammen eine Festelektrolyt-Hochtemperatur-Brennstoffzelle.

Die Figur 2 zeigt in einer Aufsicht den Aufbau eine nach dem Kreuzstromprinzip aufgebaute bipolare Platte 12. Diese ist einteilig ausgeführt und besteht aus einem elektrisch gut leitendem Werkstoff, dessen thermischer Ausdehnungskoeffizient im Temperaturbereich von 0 bis 1000 °C möglichst nahe dem der Festelektrolytplatten 28 liegt. Im Ausführungsbeispiel ist dies eine CrFe5Y₂O₃l-Legierung. Die bipolare Platte 12 enthält auf jeder ihrer beiden Seiten zwei zueinander parallele, mit Ausnahme eines Randbereichs nahezu die gesamte Fläche der bipolaren Platte überdeckende Rillenfelder 14, 15, 16, 17 mit unmittelbar aneinanderliegenden parallelen Rillen. Diese münden an ihren beiden Enden in je einen schlitzförmigen Durchbruch 18, 19, 20, 21, 22, 23, 24, 25 im Randbereich der bipolaren Platte 12. Auch die andere Seite der bipolaren Platte ist genauso aufgebaut wie die ab gebildete Seite mit dem einzigen Unterschied, daß dort die Rillenfelder 16, 17 um 90° gegenüber den Rillenfeldern 14, 15 auf der abgebildeten Seite verdreht sind und daher in den seitlich der Rillenfelder 14, 15 befindlichen schlitzförmigen Durchbrüchen 22, 23, 24, 25 münden. Dies wird auch aus der Schnittdarstellung in der Figur 3 deutlich, bei der auf der Oberseite eine Rille in Längsrichtung geschnitten ist und auf der Unterseite die Rillen der beiden Rillenfelder 16, 17 in Querrichtung geschnitten sind.

Nur die beiden als obere und untere Deckplatte des Festelektrolyt-Hochtemperatur-Brennstoffzellen-Moduls 1 dienenden bipolaren Platten 2, 3 tragen auf ihren jeweiligen Außenseiten keine Rillen. Auch sind bei ihnen die schlitzförmigen Durchbrüche nicht durchgefräst, sondern nur auf der Seite mit den Rillen bis zur Tiefe der Rillen eingesenkt. Im Bereich dieser schlitzförmigen Einsenkung ist im Ausführungsbeispiel nur je ein Durchgangsloch 4, 5, 6, 7, 8, 9, 10, 11 vorgesehen, über das von außen die jeweiligen Leitungen (nicht dargestellt) für den Brennstoff bzw. den Sauerstoffträger anschließbar sind.

Die Figur 4 zeigt eine Aufsicht auf ein Festelektrolyt-Element 26 des in der Figur 1 gezeigten Brennstoffzellen-Moduls 1. Man erkennt aus dieser Aufsicht und aus dem in der Figur 5 gezeigten Schnitt, daß diese vier rechteckigen Festelektrolytplatten 28 sowie beidseitig auf diesen Festelektrolytplatten aufgebrachte Elektroden 30, 31, 32, 33, 34, 35 enthält. Dabei sind die Elektroden auf der einen Seite als Kathode und auf der gegenüberliegenden Seite als Anode ausgebildet. Die Kathoden bestehen im Ausführungsbeispiel aus einer LₓSr_{y}MnO₃-Keramik. Die Anoden bestehen im Ausführungsbeispiel aus einer Nickeloxid- bzw. Nickelzirkonoxid-Cermet. Im Ausführungsbeispiel bestehen die Festelektrolytplatten 28 aus Yttrium stabilisiertem Zirkonoxid. Die mit dem Kathoden- und Anodenmaterial beschichteten Festelektrolytplatten 28 eines jeden Festelektrolyt-Elements 26 sind in einem elektrisch isolierenden Rahmen 36 - im Ausführungsbeispiel aus MgO/Al₂O₃-Spinell - eingelegt, welcher mit den schlitzförmigen Durchbrüchen der bipolaren Platte 12 deckungsgleich angeordnete schlitzförmige Durchbrüche 38, 39, 40, 41, 42, 43, 44, 45 trägt. Dieser Rahmen wird beidseitig mit einem über der Betriebstemperatur schmelzenden Lot 50 auf die anliegenden Fensterfolien flächig aufgelötet. Sieht man einmal von dem unterschiedlichen Kathoden- und Anodenmaterial ab, so ist der geometrische Aufbau des Festelektrolyt-Elements auf seinen beiden Seiten identisch. Im Ausführungsbeispiel ist der Rahmen 36 nicht einstückig, sondern aus vier Dichtleisten 46, 47, 48, 49 aufgebaut. Der Rahmen besteht aus MgO/Al₂O₃-Spinell, das hinreichend temperaturfest und gasdicht ist und dessen elektrische Leitfähigkeit sehr gering ist.

Die Figur 6 zeigt eine Aufsicht auf eine Fensterfolie 52 des in der Figur 1 gezeigten Brennstoffzellen-Moduls 1. Die Fensterfolie besteht im Ausführungsbeispiel aus dem gleichen Material wie die bipolare Platte 12. Sie hat die gleichen äußeren Abmessungen wie die bipolare Platte und trägt an ihren Rändern schlitzförmige Durchbrüche 54, 55, 56, 57, 58, 59, 60, 61, die mit den schlitzförmigen Durchbrüchen der bipolaren Platte deckungsgleich angeordnet sind. Außerdem hat die Fensterfolie 52 vier Fensteröffnungen 62, 63, 64, 65, die in ihrer Lage so angeordnet sind, daß sie bei Auflage auf der bipolaren Platte über den Rillenfeldern 14, 15, 16, 17 zum Liegen kommen. Die Fensterdurchbrüche können wie beim linken unteren Fenster 63 ohne jeden Steg oder wie bei den anderen Fenstern 62, 64, 65 mit mehreren deckungsgleich zu den Rändern der Rillen 14, 15 der bipolaren Platte 12 verlaufenden Stege 68 ausgeführt sein. Diese Stege haben die Funktion, die Elektroden 30, 31, 32, 33, 34, 35 des Festelektrolyt-Elements 36 abzustützen und den Strom abzuführen.

Beim Betrieb des Festelektrolyt-Hochtemperatur-Brennstoff-zellen-Moduls 1 wird der Brennstoff durch die an der einen Seite des Stapels in den beiden Deckplatten 2, 3 eingebauten Durchgangslöchern 8, 9 eingespeist. Er strömt dann in die mit diesen Durchgangslöchern kommunizierenden schlitzförmigen Durchbrüche 18, 20 der beiden Deckplatten und die deckungsgleich angeordneten schlitzförmigen Durchbrüche 38, 40, 58, 60 in den darunterliegenden Fensterfolien 52, Festelektrolyt-Elementen 26 und bipolaren Platten 12 durch den ganzen Stapel hindurch und durch die mit diesen schlitzförmigen Durchbrüchen in den einzelnen bipolaren Platten kommunizierenden Rillen der einzelnen Rillenfelder 14, 15 zu den schlitzförmigen Durchbrüchen 19, 21 der gegenüberliegenden Seite des Stapels und von dort wieder durch die Bohrungen 4, 5 in den beiden Deckplatten 2, 3 des Festelektrolyt-Hochtemperatur-Brennstoffzellen-Moduls 1 wieder heraus. In gleicher Weise strömt der Sauerstoff bzw. im Ausführungsbeispiel die Luft durch die auf einer den Brennstoffzuführungen benachbarten Seite in den beiden Deckplatten 3, 4 eingelassenen Bohrungen 6, 7 und die mit diesen kommunizierenden schlitzförmigen Durchbrüchen 22, 24 der beiden bipolaren Deckplatten in die deckungsgleich darunterliegenden schlitzförmigen Durchbrüche 42, 44, 54, 56 der Fensterfolien 52, Festelektrolyt-Elementen 26 und bipolaren Platten 12 usw. durch den ganzen Stapel hindurch und von den schlitzförmigen Durchbrüchen der bipolaren Platten 12 in die dazu kommunizierenden Rillen der einzelnen Rillenfelder 16, 17 zu den gegenüberliegenden schlitzförmigen Durchbrüchen 23, 25 und von dort aus wiederum durch die mit diesen kommunizierenden Durchgangslöcher 10, 11 in den beiden Deckplatten 2, 3 heraus. Dabei ist das Festelektrolyt-Element so orientiert, daß seine Kathoden-seite den Sauerstoff führenden Rillenfeldern der benachbarten bipolaren Platte und seine Anodenseite dem Brennstoff führenden Rillenfeldern der anderen, benachbarten bipolaren Platte zugewandt ist. Die Strömungsrichtungen des Brennstoffs und des Sauerstoffs sind daher rechtwinklig zueinander angeordnet. Man spricht hier vom Kreuzstromprinzip.

Beim Durchströmen der Rillenfelder befindet sich der Sauerstoff in direktem Kontakt mit den Kathoden der einzelnen Festelektrolyt-Elemente. An der Phasengrenze Kathode-Fest-elektrolyt werden die O₂-Moleküle aus der Luft unter Elektronenaufnahme in O⁻-Ionen umgewandelt. Als D-Ionen können sie über Sauerstoffleerstellen durch den Zirkonoxid-Festelektrolyten wandern. Dabei gelangen sie schließlich zur Anode, wo sie an der Phasengrenze Anode-Festelektrolyt unter Abgabe von Elektroden mit dem Brenngas zu Kohlendioxid und Wasserdampf reagieren. Das sich bei der Oxidation des Brenngases bildende Kohlendioxid- und Wasserdampfgemisch wird dann zusammen mit dem Brenngas wieder abgezogen. Dabei kann der Brennstoff extern in einer hier nicht weiter dargestellten Weise von den Verbrennungsprodukten CO₂ und H₂O getrennt und wieder in die Brennstoffzuführungsleitung eingespeist werden. Die an der Anode und Kathode sich bildenden Potentialunterschiede sind durch die jeweiligen gut leitenden Fensterfolien 52 und bipolaren Platten 12, die beide aus einer CrFe5Y₂O₃l-Legierung bestehen, untereinander in Serie geschaltet. Die Summe der in Serie geschalteten Potentiale der einzelnen Brennstoffzellen 1 können an den Deckplatten abgegriffen werden.

Dadurch, daß sowohl für die Fensterfolien als auch für die bipolaren Platten eine CrFe5Y₂O₃l-Legierung verwendet ist, haben diese unmittelbar an den einzelnen Festelektrolyt-Elementen anliegenden plattenförmigen Bauteile einen Ausdehnungskoeffizienten, der über den gesamten Temperaturbereich von 0 °C bis 1000 °C mit den Ausdehnungskoeffizienten des aus Yttrium stabilisierten Zirkonoxid bestehenden Festelektrolyten weitgehend übereinstimmt. Die Differenz dieser beiden Ausdehnungskoeffizienten von Festelektrolytplatten einerseits und Fensterfolien und bipolaren Platten andererseits ist so gering, daß bei den gegebenen Abmessungen des Festelektrolyten von 5 cm Dehnungsunterschiede erzeugt werden, die noch im Bereich der Elastizität des Keramikmaterials des Festelektrolyt-Elements liegen. Dadurch wird vermieden, daß auch bei häufigem Ein-und Ausschalten des Hochtemperatur-Brennstoff-Elements mit den dabei verbundenen starken Temperaturänderungen eine Rißbildung im Festelektrolyten entstehen kann. Dadurch, daß der mittlere Ausdehnungskoeffizient der Legierung im Temperaturbereich von 0 °C bis 1000 °C wenig über dem Ausdehnungskoeffizienten von Yttrium stabilisiertem Zirkonoxid liegt, wird, ausgehend von der Löttemperatur, mit der die Fensterfolie auf das Festelektrolyt-Element aufgelötet wird, letzteres bei niedrigeren Temperaturen eher gestaucht denn gedehnt. Dies kommt der geringen Zugfestigkeit des Festelektrolyten entgegen.

Als metallische Komponenten, die vorzugsweise aus den genannten Legierungen gefertigt werden sollten, sind außer den bipolaren Platten, den Grund- oder Deckplatten, und den Fensterfolien auch Stützkonstruktionen, Rohrleitungen und Stromabnehmer zu verstehen. Auch diese Bauelemente sollten den gleichen Ausdehnungskoeffizienten aufweisen, um Verspannungen im Modul oder zwischen den Modulen einer Anlage zu vermeiden.

## Patentansprüche

1. Festelektrolyt-Hochtemperatur-Brennstoffzellen-Modul (1), das einen aus Yttrium stabilisiertem Zirkonoxid bestehenden keramischen Festelektrolyten enthält und wenigstens eine metallische Komponente (12, 26, 52) umfaßt, die aus einer Chromlegierung mit 3 bis 10 Atomprozent Eisen sowie 0,5 bis 5 Atomprozent Seltenes Erdmetall und/oder Seltenes Erdmetall-oxid besteht, deren thermischer Ausdehnungskoeffizient bei einer Temperatur von 200 °C 8,5 x 10⁻⁶ bis 10,5 x 10⁻⁶ je Grad Kelvin beträgt, mit der Temperatur ansteigt und bei 900 °C einen Wert im Bereich von 4 x 10⁻⁶ bis 15 x 10⁻⁶ erreicht.

2. Festelektrolyt-Hochtemperatur-Brennstoffzellen-Modul (1) nach Anspruch 1, bei dem der mittlere thermische Ausdehnungskoeffizient im gesamten Temperaturbereich von 0 bis 1000 °C stets um weniger als 10 % vom Ausdehnungskoeffizienten des Yttrium stabilisierten Zirkonoxids abweicht.

3. Festelektrolyt-Hochtemperatur-Brennstoffzellen-Modul (1) nach Anspruch 1 oder 2, bei dem die metallische Komponente (12, 26, 52) aus einer CrFe5Y₂O₃1-Legierung besteht.

4. Festelektrolyt-Hochtemperatur-Brennstoffzellen-Modul (1) nach einem der vorherigen Ansprüche, bei dem das Seltene Erdmetall Yttrium ist.

5. Festelektrolyt-Hochtemperatur-Brennstoffzellen-Modul (1) nach einem der vorherigen Ansprüche, bei dem die metallische Komponente (12) eine bipolare Platte ist.

6. Festelektrolyt-Hochtemperatur-Brennstoffzellen-Modul (1) nach einem der Ansprüche 1 bis 4, bei dem die metallische Komponente (52) eine Fensterfolie ist.

## Claims

1. Solid electrolyte high-temperature fuel cell module (1) which contains a ceramic solid electrolyte consisting of yttrium-stabilized zirconium oxide and which comprises at least one metal component (12, 26, 52) consisting of a chromium alloy having from 3 to 10 atom % iron and from 0.5 to 5 atom % rare-earth metal and/or rare-earth metal oxide, and having a coefficient of thermal expansion, at a temperature of 200°C, which amounts to from 8.5 x 10⁻⁶ to 10.5 x 10⁻⁶ per kelvin by which the temperature rises, and at 900°C attains a value in the range from 4 x 10⁻⁶ to 15 x 10⁻⁶.

2. Solid electrolyte high-temperature fuel cell module (1) according to claim 1, in which the mean coefficient of thermal expansion in the entire temperature range from 0° to 1000°C deviates always by less than 10% from the coefficient of expansion of the yttrium-stabilized zirconium oxide.

3. Solid electrolyte high-temperature fuel cell module (1) according to claim 1 or 2, in which the metal component (12, 26, 52) consists of a CrFe5Y₂O₃l alloy.

4. Solid electrolyte high-temperature fuel cell module (1) according to one of the preceding claims, in which the rare-earth metal is yttrium.

5. Solid electrolyte high-temperature fuel cell module (1) according to one of the preceding claims, in which the metal component (12) is a bipolar plate.

6. Solid electrolyte high-temperature fuel cell module (1) according to one of claims 1 to 4, in which the metal component (52) is a window foil.

## Revendications

1. Module (1) de pile à combustible à haute température et à électrolyte solide, qui renferme un électrolyte solide en céramique constitué d'oxyde de zirconium stabilisé par de l'yttrium et qui comprend au moins un constituant (12,26,52) métallique qui est constitué d'un alliage de chrome ayant de 3 à 10 pour cent en atome de fer ainsi que 0,5 à 5 pour cent en atome de métal de terre rare et/ou d'oxyde de métal de terre rare, dont le coefficient de dilatation thermique à une température de 200°C est compris entre 8,5 x 10⁻⁶ et 10,5 x 10⁻⁶ par degré Kelvin, s'élève en fonction de la température et atteint à 900°C une valeur de l'ordre de 4 x 10⁻⁶ à 15 x10⁻⁶.

2. Module (1) de pile à combustible à haute température et à électrolyte solide suivant la revendication 1, dans lequel le coefficient moyen de dilatation thermique dans tout l'intervalle de température de 0 à 1000°C s'écarte toujours de moins de 10 % du coefficient de dilatation de l'oxyde de zirconium stabilisé par de l'yttrium.

3. Module (1) de pile à combustible à haute température et à électrolyte solide suivant la revendication 1 ou 2, dans lequel le constituant métallique (12,26,52) est en un alliage CrFe5Y₂O₃l.

4. Module (1) de pile à combustible à haute température et à électrolyte solide suivant l'une des revendications précédentes, dans lequel le métal de terre rare est l'yttrium.

5. Module (1) de pile à combustible à haute température et à électrolyte solide suivant l'une des revendications précédentes, dans lequel le constituant (12) métallique est une plaque bipolaire.

6. Module (1) de pile à combustible à haute température et à électrolyte solide suivant l'une des revendications 1 à 4, dans lequel le constituant (52) métallique est une feuille formant fenêtre.
